# EUROPÄISCHE PATENTSCHRIFT

(11) **EP 1 959 271 B1**
(45) Veröffentlichungstag und Bekanntmachung des Hinweises auf die Patenterteilung: **24.06.2009**
(21) Anmeldenummer: 08001867.4
(22) Anmeldetag: 01.02.2008
(51) Int. Cl.: G01S 17/02, G01S 7/497, G01V 8/20, G01S 7/481

(54) **Optoelektronische Sensoranordnung und Verfahren zur Überprüfung der Funktionsweise und/oder Justierung einer optoelektronischen Sensoranordnung**
Opto-electronic sensor assembly and method for testing the functionality and/or adjusting an opto-electronic sensor assembly
Agencement de capteur optoélectrique et procédé de vérification du mode de fonctionnement et/ou de l'ajustement d'un agencement de capteur optoélectronique

(30) Priorität: 14.02.2007 DE 102007007903
(43) Veröffentlichungstag der Anmeldung: 20.08.2008
(73) Patentinhaber: SICK AG, 79183 Waldkirch (DE)
(72) Erfinder: Wüstefeld, Martin, 79350 Sexau (DE)
(74) Vertreter: Modrow, Stephanie

(56) Entgegenhaltungen:
- EP-A- 1 065 522
- EP-A- 1 442 319
- EP-A- 1 813 961
- DE-A1-9102005 033 34
- DE-U1-5202006 014 92
- US-A1- 2003 128 351
- US-A1- 2003 218 737

## Beschreibung

Die Erfindung betrifft eine optoelektronische Sensoranordnung und ein Verfahren zur Überprüfung der Funktionsweise und/oder Justierung dieser optoelektronischen Sensoranordnung.

Bekannt sind optoelektronische Sensoranordnungen mit wenigstens zwei Lichtsendern, denen jeweils ein Lichtempfänger zugeordnet ist, wobei die Lichtempfänger jeweils als ortsauflösende Lichtempfänger ausgebildet sind, und wobei jeweils der Lichtsender und der zugehörige Lichtempfänger derart zueinander angeordnet sind, dass ein von dem Lichtsender ausgesandter Lichtstrahl nach Reflektion oder Streuung an einer Grenzfläche vom zugehörigen Lichtempfänger detektierbar ist. Derartige optoelektronische Sensoranordnungen bilden ein tastendes Lichtgitter, mit welchem ein Schutzbereich überwacht werden kann.

Lichtgitter finden in der Praxis breite Verwendung in sicherheitsrelevanten Anwendungen, die die sichere Detektion von Objekten im Lichtgitter zwingend erfordern, wobei einerseits das tastende Lichtgitter eine Position eines Objektes im Schutzfeld eindeutig zuordnen können und andererseits das Objekt sicher detektieren muss. Zur Lösung des erstgenannten Zieles ist eine präzise Bestimmung des Abstands zwischen tastendem Lichtgitter und Objekt entlang der Z-Achse notwendig, wofür die erzielte Messgenauigkeit beispielsweise der auf Triangulations- oder Flugzeitmessungen basierenden Verfahren entscheidend ist. Hinsichtlich der zweiten Aufgabe kommt es auf eine exakt definierte laterale Ausrichtung in der X/Y-Ebene an. Bei einer ungenauen lateralen Ausrichtung kommt es zu Löchern im Schutzfeld, an denen die angestrebte Auflösung nicht mehr erreicht wird.

Es gibt eine Reihe vorbekannter Lösungen im Hinblick auf optoelektronische Sensoranordnungen. Auf einige dieser Lösungen soll anhand von typischen Beispielen hingewiesen werden.

Allgemein bekannt ist die Verwendung von Scannern zur sicheren, tastenden Positionserkennung. Bei dieser Lösung kann jedoch nicht auf ein paralleles Schutzfeld zurückgegriffen werden, so dass die Messung vergleichsweise langsam erfolgt. Ein zusätzlicher Nachteil eines solchen Systems liegt in seinem hohen Preis.

Der EP 1442319 B1 ist ein tastendes, auf dem Prinzip von Laufzeitmessungen basierendes Lichtgitter mit einem ortsaufgelösten Empfänger zu entnehmen, das aufgrund seines parallelen Schutzfeldes schnellere Messungen erlaubt. Ein Nachteil dieses Systems liegt in der Tatsache, dass eine Beleuchtung mittels eines Lasers zwingend notwendig ist, was nicht nur zu hohen Kosten führt, sondern wegen des Konzeptes der Kollimation auch die exakte Strahllage des Senders zu einem besonders empfindlichen Faktor bei der Gewährleistung der Auflösung werden lässt. Wie die angestrebte Auflösung sichergestellt werden soll und wie Löcher im Schutzfeld zu verhindern sind, wird aber in dieser Druckschrift trotz der diesbezüglich verschärften Problematik nicht dargestellt.

Eine andere laufzeitbasierte Überwachungseinrichtung mit Pixelsensor und begrenzenden Flächen ist der EP 1065522 B1 zu entnehmen. Der Nachteil dieses Systems liegt in einer erheblichen Einschränkung seiner Funktionalität, die darauf basiert, dass begrenzende Flächen ausgeführt sind und ein V-förmiges Schutzfeld erzeugt wird, das Zusatzfunktionalitäten wie Ausblendung oder reduzierte Auflösung nicht ermöglicht.

Aus der DE 20 2006 014 925 U1 ist ein optischer Sensor bekannt, bei dem der Verschmutzungszustand der optische Frontscheibe ermittelt werden kann, basierend auf einer mehrfachen Reflexion von Beleuchtungslicht an der Frontscheibe, das auf einem zusätzlichen Empfänger detektiert wird.

Aus der US 2003/0128351 A1 ist ein optoelektronischer Entfernungssensor bekannt, bei dem der ausgehende Sendestrahl über zwei klappbare Spiegeleinheiten intern direkt auf einen ortsauflösenden Empfänger leitbar ist, um ein Referenz-Entfernungssignal zu erzeugen.

Aus der nachveröffentlichten EP 1 813 961 A2 ist eine optoelektronische Überwachungseinheit mit einem Bildgeber und einer Beleuchtungseinheit für strukturierte Muster bekannt, bei der direkt an der Frontscheibe reflektierte Beleuchtungsstrahlen nicht in den Bildgeber gelangen, während diffus gestreute Strahlen der Frontscheibe reflektiert werden. Dabei wird ein diffus aufstreuender Bereich der Frontscheibe genutzt, um eine korrekte gegenseitige Zuordnung der optischen Komponenten zu überprüfen.

Als interner Stand der Technik ist der Anmelderin weiterhin ein tastendes, auf Triangulationsmessungen basierendes Lichtgitter bekannt.

Diese Lösung basiert auf einem sichtbaren Laserstrahl, so dass besonders strenge Divergenzforderungen zu erfüllen hat. Dementsprechend ist die Anwendung dieses Lichtgitters besonders aufwändig, da eine relative Justage aller Laserstrahlen mühsam und teurer ist.

Die Aufgabe der Erfindung besteht daher darin, eine Vorrichtung und ein Verfahren zur Überprüfung der Funktionsweise und/oder der Justierung einer optoelektronischen Sensoranordnung bereitzustellen, mit welchem Verschiebungen der optimalen relativen Position zwischen den Lichtsendern und den entsprechenden Lichtempfängern überprüft werden kann und die relative Anordnung zwischen den Bauteilen der Sensoranordnung überprüft werden können, so dass Löcher im Schutzfeld nachgewiesen und geeignete Gegenmaßnahmen eingeleitet werden können.

Die Aufgabe wird gelöst durch eine optoelektronische Sensoranordnung mit den Merkmalen des Patentanspruchs 1 und ein Verfahren zur Überprüfung der Funktionsweise und/oder Justierung einer optoelektronischen Sensoranordnung mit den Merkmalen des Patentanspruchs 20.

Vorteilhafte Ausgestaltungen und Weiterbildungen der Erfindung sind in den Unteransprüchen angegeben.

Der Erfindung liegt die Erkenntnis zugrunde, dass es möglich ist, durch Einfügen eines zusätzlichen optischen Elementes in geeigneter Justierung in den Strahlengang mittels eines Teils des von einem gegebenen Lichtsender abgestrahlten Lichtes ein zusätzliches, ortsverschobenes Abbild des Lichtsenders auf einem ortsauflösenden Lichtempfänger, im folgenden als "Referenzspot" bezeichnet, zu erzeugen. Die exakte Position dieses Abbilds ist empfindlich von der relativen Ausrichtung von Lichtsender und Lichtempfänger zueinander abhängig, so dass durch eine Verschiebung des Referenzspots relativ zu einem in einer Auswerte- und Speichereinheit gespeicherten Sollwert das Auftreten eines Auflösungsloches sicher erkannt werden kann.

Durch Speichern der Intensität des Referenzspots beeinträchtigt auch eine Koinzidenz eines am Objekt reflektierten oder gestreuten Strahles und des Referenzstrahles nicht die Funktion des Systems. Es ist dann auch nicht möglich, dass ein Ausfall eines Lichtsenders durch den Eintrag von an dem Objekt reflektierten oder gestreuten Licht einer anderen Sendeeinheit, der zufällig an der Soll-Position des Referenzspots erfolgt, einen intakten Lichtsender vortäuscht, da ein Intensitätsunterschied zu erwarten ist.
Auch die Verschmutzung von Lichtsendern oder Lichtempfängern, die das Risiko eines Nichtansprechen der optoelektronischen Sensoranordnung auf einen im Überwachungsraum befindlichen Gegenstand mit sich bringt, wird zuverlässig anhand der Abweichung von der Sollintensität festgestellt.

Die erfindungsgemäße optoelektronische Sensoranordnung weist wenigstens ein Lichtsender-Lichtempfängerpaar, bestehend aus einem Lichtsender, dem ein Lichtempfänger zugeordnet ist, auf, wobei der Lichtempfänger als ortsauflösender Lichtempfänger ausgebildet ist.

Der Lichtsender und der zugehörige Lichtempfänger sind jeweils derart zueinander angeordnet, dass ein von dem Lichtsender ausgesandter Lichtstrahl nach Reflektion oder Streuung an einer Grenzfläche eines Gegenstandes vom zugehörigen Lichtempfänger detektierbar ist.

Die optoelektronische Sensoranordnung weist eine Auswerte- und Speichereinheit auf, welche geeignet ist, die aktuellen Empfangswerte für jeden Lichtsender und den zugehörigen Lichtempfänger zu detektieren und die aktuellen relativen Lagen der Empfangswerte mit in der Auswerte- und Speichereinheit hinterlegten Sollwerten der relativen Lagen zu vergleichen.

Darüber hinaus weist die erfindungsgemäße optoelektronische Sensoranordnung zwingend ein weiteres optisches Element auf, das so angeordnet und ausgerichtet ist, dass dadurch der vom Lichtsender ausgesandte Lichtstrahl in eine transmittierte erste Komponente und eine reflektierte zweite Komponente aufgeteilt ist und die am weiteren optischen Element reflektierte zweite Komponente des Lichtstrahles an einer definierten Position des dem Lichtsender zugeordneten Lichtempfängers nachweisbar ist, so dass ein verschobenes Abbild eines Lichtsenders auf den jeweils zugeordneten Lichtempfänger abgebildet wird.

Dadurch ermöglichst auch die optoelektronische Sensoranordnung eine Überprüfung der Funktionsweise und/oder der Justierung der optoelektronischen Sensoranordnung.

Durch die erfindungsgemäße Ausgestaltung wird es möglich, während des Regelbetriebes der optoelektronischen Sensoreinrichtung gleichzeitig die Funktion der einzelnen Lichtsender und Lichtempfänger zu überprüfen und Fehler festzustellen. Ein Ausfall eines Lichtsenders äußert sich in einer Anordnung gemäß dem Stand der Technik dadurch, dass der zugeordnete Lichtempfänger kein Signal mehr empfängt. Dies wäre aber auch der Fall, wenn sich bei funktionierendem Lichtsender kein Objekt in dem von diesem ausgesandten Lichtstrahl befände.

Im erfindungsgemäßen System hingegen muss, auch wenn der Lichtstrahl nicht blockiert ist, ein Referenzspot auf dem Lichtempfänger nachgewiesen werden, wenn das Sendeelement funktioniert. Empfängt der Lichtempfänger gar kein Signal, kann mit Sicherheit auf eine Störung des Systems geschlossen werden.

Darüber hinaus wird aber auch eine Dejustage der optoelektronischen Sensoranordnung im erfindungsgemäßen System unmittelbar nachweisbar, da mit ihr eine Veränderung der Lage des Referenzspots zwingend einhergeht, die durch Auswertung des Signals des ortsauflösenden Detektors unmittelbar erkennbar wird. Dies ist von hoher Bedeutung, weil eine solche Dejustage beispielsweise bei einem Lichtgitter zu Auflösungslöchern führt, die in einer sicherheitstechnischen Applikation inakzeptabel sind. Konventionelle Systeme müssen zur Feststellung einer Dejustage im Betrieb stets ein Referenzgitter verwenden, diese Notwendigkeit fällt im erfindungsgemäßen System weg.

Weitere Vorteile des erfindungsgemäßen Systems liegen in der Vermeidung hoher mechanischer Anforderungen und hoher Anforderungen an die Abbildungsqualität und der Möglichkeit, bei Laufzeitdauer(TOF)- wie auch bei Phasenlagenmessung hohe Reichweiten zu erzielen.

Eine besonders einfache und preisgünstige Ausführungsform des Erfindungsgedankens wird erzielt, wenn als Abbild des Lichtsenders auf dem Lichtempfänger ein Reflex an der Frontscheibe des Systems oder der einzelnen Lichtsender/Lichtempfängereinheit verwendet wird, die in vielen Fällen bereits vorhanden ist, um die in der Regel in den Lichtsendern und/oder Lichtempfängern integrierten empfindlichen Sende- bzw. Empfangsoptiken vor Umwelteinflüssen zu schützen.

Ordnet man die Frontscheibe geneigt zur optischen Empfangsachse an, kann die Lage des Referenzsignalspots auf dem ortsauflösenden durch die Wahl eines entsprechenden Neigungswinkels gezielt einstellen. Es wäre auch denkbar, eine manuelle oder motorisierte Einstellmöglichkeit für den Neigungswinkel der Frontscheibe vorzusehen, um eine hochgradig flexible optische Sensoranordnung bereitzustellen.

Selbstverständlich lassen sich aber auch andere optische Elemente, wie z.B. partiell durchlässige Spiegel oder geeignet beschichtete Bauteile verwenden. Es ist für das Funktionieren der Erfindung lediglich notwendig, dass der Strahl durch das optische Element in zwei Komponenten aufgeteilt wird, deren eine als tastender Strahl in der optoelektronischen Sensoranordnung verwendet werden kann, während die andere Komponente an eine feste Referenzposition auf dem ortsauflösenden Lichtempfänger propagiert.

In einer bevorzugten Ausführungsform der Erfindung ist vorgesehen, die Optik der Lichtempfänger mittels einer Empfangslinse anzupassen, die gemäß einer Empfangspupillenteilung mit zueinander verschobenen Achsen aufgebaut ist. Durch diese Anordnung kann die relative Lage von Objektspot und Referenzspot so beeinflusst werden, dass eine gute Trennung sichergestellt ist.

Je nach den Eigenschaften der optoelektronischen Sensoranordnung, die optimiert werden sollen, haben sich unterschiedliche Ansteuerungen für die Lichtsender und Lichtempfänger als vorteilhaft erwiesen. Dazu ist eine Steuereinheit vorzusehen, welche geeignet ist, die Lichtsender derart anzusteuern, dass die Lichtsender zeitlich versetzt zueinander einen Lichtstrahl aussenden, um nicht jeden Lichtsender kontinuierlich Licht aussenden zu lassen, jedoch weiterhin eine zuverlässige Überwachung des Schutzbereichs zu garantieren.

Wird eine möglichst hohe Messgenauigkeit der Abstandsmessung entlang der Z-Achse gewünscht, so sind die einzelnen Lichtsender und Lichtempfänger zeitlich nacheinander anzusteuern, um Überlagerungseffekte zu vermeiden.

Soll hingegen die Ansprechzeit minimiert und/oder die Reichweite der optischen Sensoranordnung optimiert werden, sind die Lichtsender und Lichtempfänger zeitgleich anzusteuern. Die erzielten Vorteile gehen aber auf Kosten der Messgenauigkeit.

Natürlich ist es auch möglich, jeweils eine bestimmte Anzahl von Sendern und Empfängern zeitgleich anzusteuern, und damit das Verhältnis zwischen Reichweite und Auflösung der optischen Sensoranordnung gezielt zu variieren.

Eine weitere Variationsmöglichkeit bietet die erfindungsgemäße optische Sensoranordnung hinsichtlich des eingelernten Empfangswinkelbereiches, den die Lichtempfänger abdecken.

Soll ein echtes Lichtgitter aufgespannt werden, muss ein rotationssymmetrischer Empfangswinkelbereich eingelernt werden; es ist aber auch möglich, einen fächerförmigen Empfangswinkelbereich einzulernen.

Weitere Eigenschaften der erfindungsgemäßen optischen Sensoranordnung lassen sich durch spezielle Anordnung der Lichtsender und Lichtempfänger beeinflussen. So kann eine besonders schmale optische Sensoranordnung durch eine vertikal benachbarte Anordnung der einander zugeordneten Lichtsender und Lichtempfänger erreicht werden. Allerdings ist in dieser Anordnung die erzielbare Auflösung schlechter.
Um eine besonders gute Auflösung zu erreichen, werden die Lichtsender horizontal neben den ihnen zugeordneten Lichtempfängern angeordnet.

Vorteilhafterweise werden die Lichtsender als LED, LD (Laserdiode) oder VCSEL (vertical cavity surface emitting laser) ausgeführt. Dadurch werden die Spots kleiner und damit die Chips kleiner, was eine weitere Preisreduktion mit sich bringt.

Vorzugsweise senden die Lichtsender einen kollimierten Lichtstrahl aus, damit sichergestellt ist, dass der zugehörige Lichtempfänger im Wesentlichen das von dem entsprechend zugehörigen Lichtsender ausgesendete Licht detektiert, wozu der Lichtsender neben der Lichtquelle mindestens eine weitere Linse umfasst. Es ist aber auch möglich, keine Linse vorzusehen.

Die Empfangselemente der ortsauflösenden Lichtempfänger sind vorzugsweise als segmentierte Diode oder Pixelarray ausgebildet, um eine besonders hohe Ortsauflösung bereitzustellen. Sie können ein- oder mehrteilig ausgeführt sein.

Vorteilhaft ist es dabei, eine gemeinsam mechanische Basis für die Empfangselemente der ortsauflösenden Lichtempfänger vorzusehen, um die Herstellungskosten zu reduzieren.

Weiterhin erweist sich als vorteilhaft, dass mit dem erfindungsgemäßen System sowohl phasenlagen- als auch laufzeitbasierte Messungen möglich sind.

Die Erfindung wird anhand der nachfolgenden Figuren, die eine spezielle Ausführungsform der Erfindung darstellen, ausführlich erläutert. Es zeigt
- Fig. 1:: eine schematische Darstellung einer idealisierten tastenden optoelektronischen Sensoranordnung gemäß Stand der Technik
- Fig. 2:: eine schematische Darstellung eines Ausschnitts aus einer erfindungsgemäßen tastenden optoelektronischen Sensoranordnung.
- Fig. 3a:: Das Empfangssignal einer ortsauflösenden Empfangseinheit einer tastenden optoelektronischen Sensoranordnung gemäß Stand der Technik, wenn ein Gegenstand nachgewiesen wird.
- Fig. 3b:: Das Empfangssignal einer ortsauflösenden Empfangseinheit einer erfindungsgemäßen tastenden optoelektronischen Sensoranordnung, wenn ein Gegenstand nachgewiesen wird.
- Fig. 3c:: Das Empfangssignal einer ortsauflösenden Empfangseinheit einer erfindungsgemäßen tastenden optoelektronischen Sensoranordnung, wenn kein Gegenstand nachgewiesen wird.

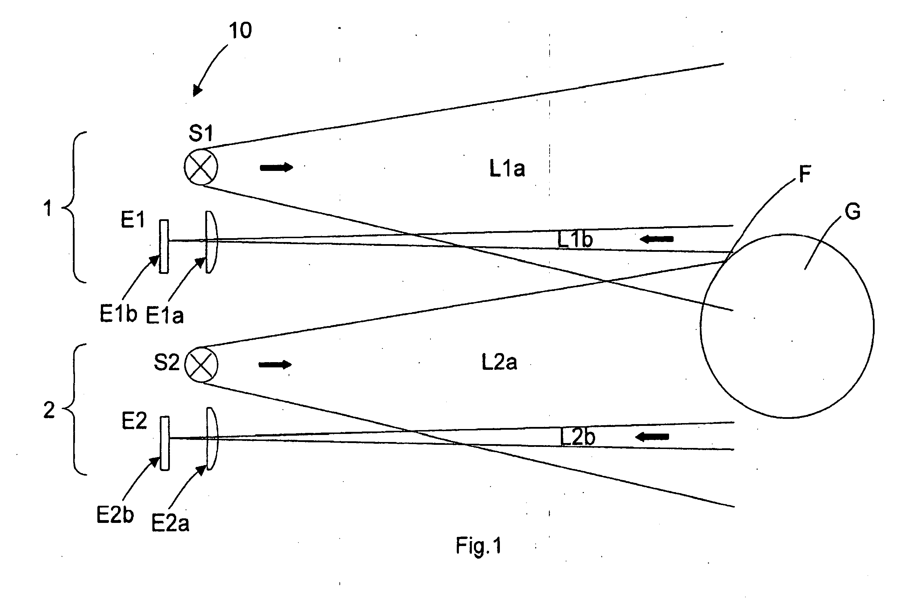

Figur 1 zeigt eine schematische Darstellung einer idealen optoelektronischen Sensoranordnung 10 gemäß dem Stand der Technik mit einem ersten Lichtsender S1 und einem zweiten Lichtsender S2. Dabei werden die nur schematisch dargestellten Lichtsender S1, S2 in den meisten Ausführungsformen jeweils ein Sendeelement aufweisen, welches hinter einer Optik angeordnet ist, die in der Regel aus einer Linse oder einer Linsenanordnung gebildet ist. Von den Lichtsendern S1, S2 wird jeweils ein Lichtstrahl L1a, L2a ausgesendet, welche jeweils auf einen Gegenstand G fallen und zumindest partiell an dessen Grenzfläche F reflektiert oder gestreut werden. Der Gegenstand G ist dabei in der Figur 1 so dimensioniert, dass er gerade die Auflösung des Lichtgitters repräsentiert.

Die Lichtsender S1, S2 sind bevorzugt derart ausgebildet, dass die Lichtstrahlen L1a, L2a als kollimierte Lichtstrahlen ausgebildet sind, wozu das Sendeelement beispielsweise als Single Point Diode, VCSEL (Vertical-Cavity Surface-Emitting Laser) oder Laserdiode mit einer entsprechenden Kollimationsoptik ausgebildet sein kann.

Dem ersten Lichtsender S1 ist ein erster Lichtempfänger E1 und dem zweiten Lichtsender S2 ein zweiter Lichtempfänger E2 zugeordnet. Dadurch werden zwei Lichtsender/Lichtempfänger-paare 1, 2 gebildet. Dabei detektieren die Lichtempfänger E1 und E2 jeweils am Gegenstand G reflektiertes oder gestreutes Licht.

Die Lichtempfänger E1 und E2 weisen jeweils ein ortsauflösendes Empfangselement E1b, E2b auf, welches beispielsweise als segmentierte Diode, als PSD (Position Sensitive Device) oder als Pixelarray ausgebildet sein kann. Vor den Empfangselementen E1b und E2b ist eine entsprechende Optik E1a und E2a angeordnet, welche in der Regel aus einer Linse oder einer Linsenanordnung besteht.

Die idealisierte Sensoranordnung 10 entspricht beispielsweise dem Zustand in der Produktion, in welcher die Lichtsender S1, S2 und die Lichtempfänger E1, E2 mit ihren entsprechenden Komponenten in der gewünschten relativen Position innerhalb eines Gehäuses der Sensoranordnung 10 zueinander angeordnet und optimal justiert werden können.

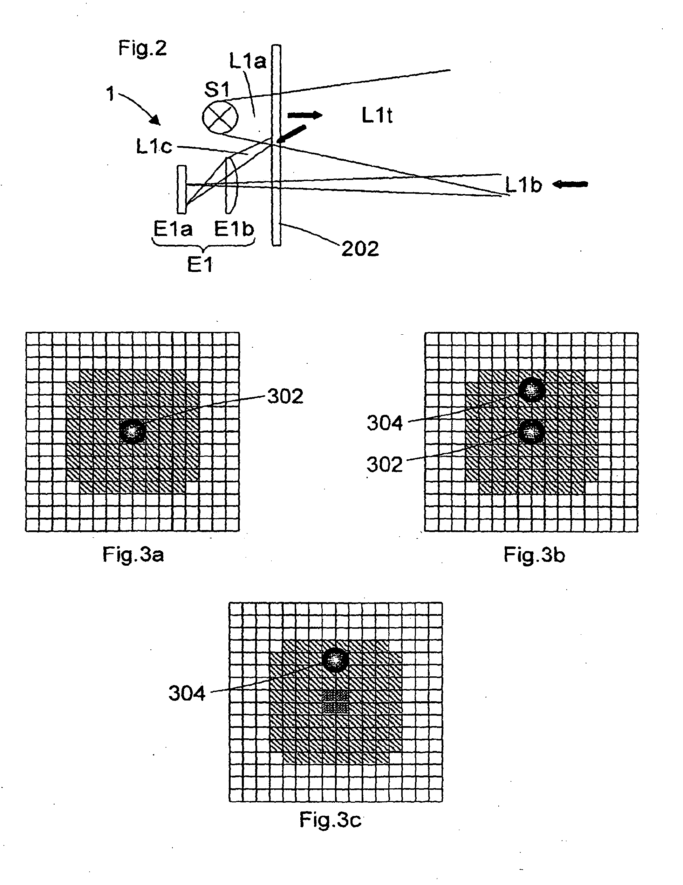

Figur 2 zeigt eine vergrößerte schematische Darstellung eines einzelnen Lichtsender/Lichtempfängerpaares 1 in erfindungsgemäßer Ausführung, wobei gleiche Komponenten mit gleichen Bezugsziffern bezeichnet sind. Neu hinzugekommen ist eine Frontscheibe 202 des Lichtsender/Lichtempfängerpaares 1, die in dieser Ausführungsform das erfindungsgemäß vorgesehene zusätzliche optische Element bildet. Das vom Lichtsender S1 emittierte Licht trifft auf die dem Lichtsender S1 zugewandte Grenzfläche der Frontscheibe 202 und wird in eine transmittierte erste Komponente L1t und eine reflektierte zweite Komponente L1c zerlegt. Die reflektierte zweite Komponente L1c wird durch die Optik E1a des Lichtempfängers auf eine nichtzentrische Position des ortsauflösenden Lichtempfängers E1b abgebildet.

In der erfindungsgemäßen Ausführungsform weist die Sensoranordnung 10 eine nicht abgebildete Auswerte- und Speichereinheit auf, welche die Position und/oder Intensität der Empfangswerte detektiert, hinterlegt und entsprechend verarbeitet.

Die Bestimmung der Sollwerte der Referenzposition und - Intensität erfolgt dabei vorzugsweise durch folgende Schritte, höchstvorzugsweise bereits während der Produktion der optoelektronischen Sensoranordnung:
a) Ansteuern eines einzelnen Lichtsenders S1, S2 und Lichtempfängers E1, E2 bei kontrollierter Abwesenheit von Objekten in der optischen Sensoranordnung 10,
b) Detektieren der Empfangswerte für Position und Intensität der zweiten Komponente L1c des Lichtstrahles L1a für diesen Lichtsender S1, S2 und den zugehörigen Lichtempfänger E1, E2,
c) Hinterlegen der detektierten Empfangswerte als Sollempfangswerte für dieses Lichtsender-/Lichtempfängerpaar 1, 2,
d) Ansteuern des nächsten Lichtsenders S1, S2 und Lichtempfängers E1, E2, falls noch ein Sollempfangswert für ein Lichtsender-/Lichtempfängerpaar 1, 2 unbestimmt ist.

Weiterhin ist in einer bevorzugten Ausführungsform eine Speichereinheit vorgesehen, die geeignet ist, die Lichtsender S1, S2 gegebenenfalls auch derart anzusteuern, dass jeweils nur einer oder eine definierte Gruppe der Lichtsender S1, S2 einen Lichtstrahl L1a, L2a aussendet und/oder nur einer oder eine bestimmte Gruppe der Lichtempfänger E1, E2 Licht nachweist. Insbesondere können zwischen den einzelnen von den Lichtsendern S1, S2 ausgesandten Lichtimpulsen bestimmte Zeitintervalle festgelegt werden, in welchen keiner der Lichtsender S1, S2 einen Lichtpuls aussendet, sondern gegebenenfalls weitere Testzyklen für die Sensoranordnung 10 durchgeführt werden können.

Durch das Speichern von Sollwerten für die Lagen und Intensitäten der durch die an der Frontscheibe 202 oder dem zusätzlichen optischen Element reflektierten Lichtstrahlen L1c für die einzelnen Lichtsender- und Lichtempfängerpaare 1, 2 des Systems in der Auswerte- und Steuereinheit wird die Sicherheit und die Funktionsweise der Sensoranordnung 10 erhöht, da Verschmutzungen der Lichtsender S1, S2 oder der Lichtempfänger E1, E2 erkannt werden können und insbesondere auch ein Ausfall eines der Lichtsender S1, S2 oder der Lichtempfänger E1, E2 erkannt werden kann.

Weiterhin werden Verschiebungen innerhalb der Sensoranordnung 10 der Lichtsender S1, S2 oder der Lichtempfänger E1, E2, welche zu für sicherheitstechnische Anwendungen inakzeptablen Auflösungslöchern führen würden, erkannt und können gegebenenfalls korrigiert werden.

Figur 3 stellt schematisch die auf Empfangselement E1b des Lichtempfängers E1 empfangenen Signale für eine Reihe verschiedener Anordnungen dar, wobei das Empfangselement E1b als Pixelarray ausgebildet ist.

In Figur 3a geschieht dies für den Fall einer konventionellen optischen Sensoranordnung 10, bei der lediglich das "Objektsignal" 302, d.h. der am Gegenstand G reflektierte oder gestreute Strahl L1b nachgewiesen wird.

Der Figur 3b sind die Signale auf dem Empfangselement E1b der erfindungsgemäßen optoelekronischen Sensoranordnung 10 zu entnehmen, wenn sich ein Gegenstand G im betreffenden Lichtstrahl L1t befindet. Neben dem hier beispielhaft im Zentrum des Empfangselementes E1b abgebildeten Objektsignal 302 ist hier an einer definierten Referenzposition ein Referenzsignal 304, d.h. die am zusätzlichen optischen Element reflektierte zweite Komponente L1c des vom Lichtsender S1 emittierten Lichtes nachweisbar.

Wenn sich kein Gegenstand G im Lichtstrahl L1t befindet, wird hingegen das in Figur 3c dargestellte Signal auf dem Empfangselement E1b nachgewiesen, welches dem reinen Referenzsignal 304 entspricht.

Im erfindungsgemäßen System führt sowohl eine Abweichung der Lage des Referenzsignals 304 als auch eine Unterschreitung der Sollintensität des Referenzsignals 304 zu einem Hinweissignal darauf, dass eine Auflösungslücke im Lichtgitter aufgetreten ist.

Kommt es hingegen zu einer Überschreitung der Signalintensität des Referenzsignals 304, ist der Fall eingetreten, dass das Objektsignal 302 und das Referenzsignal 304 auf dieselbe Stelle des Empfangselementes E1b fallen. In diesem Fall wird durch die Auswerte- und Speichereinheit das Signal ausgegeben, dass sich ein Gegenstand G im von der optoelektronischen Sensoreinrichtung 10 überwachten Bereich befindet.

### Bezugszeichenliste

- 1: Lichtsender/Lichtempfänger-Paar
- 2: Lichtsender/Lichtempfänger-Paar
- 10: optische Sensoranordnung
- 202: Frontscheibe
- 302: Objektsignal
- 304: Referenzsignal
- S1: Lichtsender
- S2: Lichtsender
- E1: Lichtempfänger
- E1a: Optik
- E1b: Empfangselement
- E2: Lichtempfänger
- E2a: Optik
- E2b: Empfangselement
- L1a: ausgesendeter Lichtstrahl
- L2a: ausgesendeter Lichtstrahl
- L1b: am Gegenstand reflektierter oder gestreuter Lichtstrahl
- L2b: am Gegenstand reflektierter oder gestreuter Lichtstrahl
- L1t: durch das zusätliche optische Element transmittierte erste Komponente des ausgesendeten Lichtstrahls
- L1c: am zusätzlichen optischen Element reflektierte zweite Komponente des ausgesendeten Lichtstrahls
- F: Grenzfläche
- G: Gegenstand

## Patentansprüche

1. Optoelektronische Sensoranordnung (10) umfassend
• wenigstens ein Lichtsender-Lichtempfängerpaar (1), bestehend aus einem Lichtsender (S1)-, dem ein Lichtempfänger (E1) zugeordnet ist, wobei der Lichtempfänger (E1) als ortsauflösender Lichtempfänger ausgebildet ist, und wobei jeweils der Lichtsender (S1) und der zugehörige Lichtempfänger (E1) derart zueinander angeordnet sind, dass ein von dem Lichtsender (S1) ausgesendeter Lichtstrahl (L1a) nach Reflektion oder Streuung an einer Grenzfläche (F) eines Gegenstandes (G) vom zugehörigen Lichtempfänger (E1) detektierbar ist, und
• eine Auswerte- und Speichereinheit,
**dadurch gekennzeichnet, dass** im Strahlengang des ausgesendeten Lichtstrahles (L1a) ein weiteres optisches Element oder eine Frontscheibe (202) so angeordnet und ausgerichtet ist, dass dadurch der ausgesendete Lichtstrahl (L1a) in eine transmittierte erste Komponente (L1t) und eine reflektierte zweite Komponente (L1c) aufgeteilt ist und die am weiteren optischen Element oder der Frontscheibe (202) reflektierte zweite Komponente (L1c) des Lichtstrahles (L1a) an einer definierten Position des dem Lichtsender (S1) zugeordneten Lichtempfängers (E1) nachweisbar ist, so dass ein ortsverschobenes Abbild des Lichtsenders auf den zugeordneten Lichtempfänger abgebildet wird.

2. Optoelektronische Sensoranordnung nach Anspruch 1,
**dadurch gekennzeichnet, dass** das weitere optische Element oder die Frontscheibe (202) in einem Winkel zur optischen Achse geneigt angeordnet ist.

3. Optoelektronische Sensoranordnung nach Anspruch 2,
**dadurch gekennzeichnet, dass** der Winkeil zur optischen Achse von Hand oder durch einen Motor einstellbar ist.

4. Optoelektronische Sensoranordnung nach einem vorstehenden Anspruch,
**dadurch gekennzeichnet, dass** der Lichtempfänger (E1) eine Empfängeroptik (E1a) umfasst, welche eine Empfangslinse aufweist, die eine Empfangspupillenteilung mit zueinander verschobenen Achsen aufweist.

5. Optoelektronische Sensoranordnung nach einem vorstehenden Anspruch,
**dadurch gekennzeichnet, dass** eine Steuereinheit vorhanden ist, welche geeignet ist, die Lichtsender (S1, S2) derart anzusteuern, dass die Lichtsender (S1, S2) zeitlich versetzt zueinander einen Lichtstrahl (L1a, L2a) aussenden.

6. Optoelektronische Sensoranordnung nach einem der Ansprüche 1 bis 5,
**dadurch gekennzeichnet, dass** eine Steuereinheit vorhanden ist, welche geeignet ist, die Lichtsender (S1, S2) derart anzusteuern, dass die Lichtsender (S1, S2) in Gruppen zusammengefasst angesteuert werden und die Gruppen zeitlich versetzt zueinander einen Lichtstrahl (L1a, L2a) aussenden.

7. Optoelektronische Sensoranordnung nach einem der Ansprüche 1 bis 5,
**dadurch gekennzeichnet, dass** eine Steuereinheit vorhanden ist, welche geeignet ist, die Lichtsender (S1, S2) derart anzusteuern, dass die Lichtsender (S1, S2) gleichzeitig einen Lichtstrahl (L1a, L2a) aussenden.

8. Optoelektronische Sensoranordnung nach einem der Ansprüche 1 bis 4,
**dadurch gekennzeichnet, dass** eine Steuereinheit vorhanden ist, welche geeignet ist, zwischen Betriebsarten der Lichtsender (S1, S2), bei denen die Lichtsender (S1, S2) gleichzeitig einen Lichtstrahl (L1a, L2a) aussenden, oder die Lichtsender (S1, S2) in Gruppen zusammengefasst angesteuert werden und die Gruppen zeitlich versetzt zueinander einen Lichtstrahl (L1a, L2a) aussenden oder die Lichtsender (S1, S2) derart angesteuert werden, dass die Lichtsender (S1, S2) zeitlich versetzt zueinander einen Lichtstrahl (L1a, L2a) aussenden, umzuschalten.

9. Optoelektronische Sensoranordnung nach einem der Ansprüche 5 bis 7,
**dadurch gekennzeichnet, dass** die Auswerte- und Speichereinheit und die Steuereinheit ausgelegt sind, um phasenlagenbasierte und/oder laufzeitbasierte Messungen zu erlauben.

10. Optoelektronische Sensoranordnung nach einem der vorstehenden Ansprüche,
**dadurch gekennzeichnet, dass** die Empfangselemente (E1b, E2b) der Lichtempfänger (E1, E2) als Mehrpixelempfänger, insbesondere als segmentierte Diode oder Pixelarray ausgebildet sind.

11. Optoelektronische Sensoranordnung nach einem vorstehenden Anspruch,
**dadurch gekennzeichnet, dass** die Lichtempfänger (E1, E2) einen rotationssymmetrischen Empfangswinkelbereich abdecken.

12. Optoelektronische Sensoranordnung nach einem der Ansprüche 1 bis 10,
**dadurch gekennzeichnet, dass** die Lichtempfänger (E1, E2) einen fächerförmigen Empfangswinkelbereich abdecken.

13. Optoelektronische Sensoranordnung nach einem der vorstehenden Ansprüche,
**dadurch gekennzeichnet, dass** eine gemeinsame mechanische Basis für die Empfangselemente (E1b, E2b) jedes Lichtempfängers vorgesehen ist.

14. Optoelektronische Sensoranordnung nach einem vorstehenden Anspruch,
**dadurch gekennzeichnet, dass** Lichtsender (S1, S2) und Lichtempfänger,(E1, E2) eines Lichtender/Lichtempfängerpaares (1, 2) vertikal zueinander angeordnet sind.

15. Optoelektronische Sensoranordnung nach einem der Ansprüche 1 bis 13,
**dadurch gekennzeichnet, dass** Lichtsender (S1, S2) und Lichtempfänger (E1, E2) eines Lichtender/Lichtempfängerpaares (1, 2) horizontal zueinander angeordnet sind.

16. Optoelektronische Sensoranordnung nach einem vorstehenden Anspruch,
**dadurch gekennzeichnet, dass** die Lichtsender (S1 S2) als LED, LD oder VCSEL ausgeführt sind.

17. Optoelektronische Sensoranordnung nach einem vorstehenden Anspruch,
**dadurch gekennzeichnet, dass** die Lichtsender (S1, S2) eine Optik zur Strahlformung oder Kollimation der ausgesandten Lichtstrahlen (L1a, L2a) umfassen.

18. Optoelektronische Sensoranordnung nach einem vorstehenden Anspruch,
**dadurch gekennzeichnet, dass** die Lichtsender (S1, S2) Licht im sichtbaren Bereich aussenden.

19. Optoelektronische Sensoranordnung nach einem vorstehenden Anspruch,
**dadurch gekennzeichnet, dass** die Speicher- und Auswerteeinheit ausgelegt ist, um die an einem gegebenen Lichtempfänger (E1, E2) registrierte und ausgelesene Position und/oder Intensität der an dem zusätzlichen optischen Element oder der Frontscheibe (202)reflektierten zweiten Komponente des Lichtstrahles (L1c) mit einem für den dem gegebenen Lichtempfänger (E1, E2) zugeordneten Lichtsender (S1, S2) abgespeicherten Positions- und/oder Intensitätswert zu vergleichen.

20. Verfahren zur Überprüfung der Funktionsweise und/oder Justierung einer optischen Sensoranordnung (10) als tastendes Lichtgitter mittels Laufzeitdauer- oder Phasenlagenmessung,
**dadurch gekennzeichnet, dass** der von einem Lichtsender (S1, S2) emittierte Lichtstrahl (L1a) von einem im Strahlengang befindlichen optischen Element oder einer Frontscheibe (202) in eine transmittierte erste Komponente (L1t) und eine reflektierte zweite Komponente (L1c) aufgeteilt wird, wobei die reflektierte zweite Komponente (L1c) ein Bild des Lichtsenders (S1, S2) an eine Position eines ortsauflösenden, dem Lichtsender (S1, S2) zugeordneten Lichtempfänger (E1, E2) abbildet, so dass ein ortsverschobenes Abbild des Lichtsenders auf den zugeordneten Lichtempfänger abgebildet wird.

21. Verfahren nach Anspruch 20,
**dadurch gekennzeichnet, dass** außerdem die Lage und Intensität der reflektierten zweiten Komponente (L1c) auf dem ortsauflösenden Lichtempfänger (E1, E2) jedes Lichtsender-/Lichtempfängerpaars (1,2) mit einer gespeicherten Referenzposition und -Intensität verglichen wird.

22. Verfahren nach Anspruch 21,
**dadurch gekennzeichnet, dass** die Sollwerte der Referenzposition und -Intensität durch folgende Schritte, vorzugsweise während der Produktion der optoelektronischen Sensoranordnung, ermittelt werden:
a) Ansteuern eines einzelnen Lichtsenders (S1, S2)und Lichtempfängers (E1, E2) bei kontrollierter Abwesenheit von Objekten in der optischen Sensoranordnung (10)
b) Detektieren der Empfangswerte für Position und Intensität der zweiten Komponente (L1c) des Lichtstrahles (L1a) für diesen Lichtsender (S1, S2) und den zugehörigen Lichtempfänger (E1, E2),
c) Hinterlegen der detektierten Empfangswerte als Sollempfangswerte für dieses Lichtsender- und Lichtempfängerpaar (1, 2),
d) Ansteuern des nächsten Lichtsenders (S1, S2) und Lichtempfängers (E1, E2), falls noch ein Wert unbestimmt ist.

23. Verfahren nach einem der Ansprüche 20-22,
**dadurch gekennzeichnet, dass** das Verfahren vor jeder Inbetriebnahme der optoelektronischen Sensoranordnung (10) und/oder regelmäßig während des Betriebs durchgeführt wird.

## Claims

1. Optoelectronic sensor arrangement (10) comprising
- at least one light transmitter/light receiver pair (1) consisting of a light transmitter (S1) which is associated with a light receiver (E1), wherein the light receiver (E1) is designed as a spatially resolving light receiver, and wherein in each case the light transmitter (S1) and the associated light receiver (E1) are arranged with respect to one another in such a way that a light beam (L1a) emitted by the light transmitter (S1) can be detected by the associated light receiver (E1) after being reflected or scattered at a boundary surface (F) of an object (G), and
- an evaluation and memory unit,
**characterised in that** a further optical element or a front screen (202) is arranged and oriented in the beam path of the emitted light beam (L1a) in such a way that the emitted light beam (L1a) is split thereby into a transmitted first component (L1t) and a reflected second component (L1c), and the second component (L1c) of the light beam (L1a) which is reflected at the further optical element or the front screen (202) can be detected at a defined position of the light receiver (E1) associated with the light transmitter (S1), so that a spatially shifted image of the light transmitter is imaged onto the associated light receiver.

2. Optoelectronic sensor arrangement according to claim 1, **characterised in that** the further optical element or the front screen (202) is arranged such that it is inclined at an angle with respect to the optical axis.

3. Optoelectronic sensor arrangement according to claim 2, **characterised in that** the angle with respect to the optical axis can be adjusted manually or by a motor.

4. Optoelectronic sensor arrangement according to a preceding claim, **characterised in that** the light receiver (E1) comprises a receiver optical system (E1a) which has a receiving lens with a receiving pupil divide with axes which are shifted with respect to one another.

5. Optoelectronic sensor arrangement according to a preceding claim, **characterised in that** a control unit is provided, which is suitable for actuating the light transmitters (S1, S2) in such a way that the light transmitters (S1, S2) emit a light beam (L1a, L2a) in a temporally offset manner with respect to one another.

6. Optoelectronic sensor arrangement according to one of claims 1 to 5, **characterised in that** a control unit is provided, which is suitable for actuating the light transmitters (S1, S2) in such a way that the light transmitters (S1, S2) are actuated together in groups and the groups emit a light beam (L1a, L2a) in a temporally offset manner with respect to one another.

7. Optoelectronic sensor arrangement according to one of claims 1 to 5, **characterised in that** a control unit is provided, which is suitable for actuating the light transmitters (S1, S2) in such a way that the light transmitters (S1, S2) simultaneously emit a light beam (L1a, L2a).

8. Optoelectronic sensor arrangement according to one of claims 1 to 4, **characterised in that** a control unit is provided, which is suitable for switching between operating modes of the light transmitters (S1, S2) in which the light transmitters (S1, S2) simultaneously emit a light beam (L1a, L2a), or the light transmitters (S1, S2) are actuated together in groups and the groups emit a light beam (L1a, L2a) in a temporally offset manner with respect to one another, or the light transmitters (S1, S2) are actuated in such a way that the light transmitters (S1, S2) emit a light beam (L1a, L2a) in a temporally offset manner with respect to one another.

9. Optoelectronic sensor arrangement according to one of claims 5 to 7, **characterised in that** the evaluation and memory unit and the control unit are designed to allow measurements based on the phase position and/or based on the time-of-flight.

10. Optoelectronic sensor arrangement according to one of the preceding claims, **characterised in that** the receiving elements (E1b, E2b) of the light receivers (E1, E2) are designed as multipixel receivers, in particular as a segmented diode or pixel array.

11. Optoelectronic sensor arrangement according to a preceding claim, **characterised in that** the light receivers (E1, E2) cover a rotationally symmetrical receiving angle range.

12. Optoelectronic sensor arrangement according to one of claims 1 to 10, **characterised in that** the light receivers (E1, E2) cover a fan-shaped receiving angle range.

13. Optoelectronic sensor arrangement according to one of the preceding claims, **characterised in that** a common mechanical base is provided for the receiving elements (E1b, E2b) of each light receiver.

14. Optoelectronic sensor arrangement according to a preceding claim, **characterised in that** the light transmitter (S1, S2) and light receiver (E1, E2) of a light transmitter/light receiver pair (1, 2) are arranged vertically with respect to one another.

15. Optoelectronic sensor arrangement according to one of claims 1 to 13, **characterised in that** the light transmitter (S1, S2) and light receiver (E1, E2) of a light transmitter/light receiver pair (1, 2) are arranged horizontally with respect to one another.

16. Optoelectronic sensor arrangement according to a preceding claim, **characterised in that** the light transmitters (S1, S2) are designed as LEDs, LDs or VCSELs.

17. Optoelectronic sensor arrangement according to a preceding claim, **characterised in that** the light transmitters (S1, S2) comprise an optical system for beam shaping or collimation of the emitted light beams (L1a, L2a).

18. Optoelectronic sensor arrangement according to a preceding claim, **characterised in that** the light transmitters (S1, S2) emit light in the visible range.

19. Optoelectronic sensor arrangement according to a preceding claim, **characterised in that** the memory and evaluation unit is designed to compare the position and/or intensity of the second component of the light beam (L1c) which is reflected at the additional optical element or the front screen (202), as recorded and read at a given light receiver (E1, E2), with a position and/or intensity value which is stored for the light transmitter (S1, S2) associated with the given light receiver (E1, E2).

20. Method for checking the functioning and/or adjustment of an optical sensor arrangement (10) as a sensing light grid by measuring the time-of-flight or phase position, **characterised in that** the light beam (L1a) emitted by a light transmitter (S1, S2) is split by an optical element or a front screen (202) located in the beam path into a transmitted first component (L1t) and a reflected second component (L1c), wherein the reflected second component (L1c) images an image of the light transmitter (S1, S2) at a position of a spatially resolving light receiver (E1, E2) associated with the light transmitter (S1, S2), so that a spatially shifted image of the light transmitter is imaged onto the associated light receiver.

21. Method according to claim 20, **characterised in that** additionally the position and intensity of the reflected second component (L1c) on the spatially resolving light receiver (E1, E2) of each light transmitter/light receiver pair (1, 2) is compared with a stored reference position and reference intensity.

22. Method according to claim 21, **characterised in that** the nominal values of the reference position and reference intensity are determined by the following steps, preferably during production of the optoelectronic sensor arrangement:
a) actuating an individual light transmitter (S1, S2) and light receiver (E1, E2) in the controlled absence of objects in the optical sensor arrangement (10),
b) detecting the received values for the position and intensity of the second component (L1c) of the light beam (L1a) for this light transmitter (S1, S2) and the associated light receiver (E1, E2),
c) storing the detected received values as nominal received values for this light transmitter/light receiver pair (1, 2),
d) actuating the next light transmitter (S1, S2) and light receiver (E1, E2) if there is still a value that has not been determined.

23. Method according to one of claims 20 to 22, **characterised in that** the method is carried out before each start-up of the optoelectronic sensor arrangement (10) and/or regularly during operation.

## Revendications

1. Dispositif de capteur optoélectronique (10) comprenant :
- au moins une paire de photoémetteur-photorécepteur (1) composée d'un photoémetteur (S1) auquel est associé un photorécepteur (E1),
- le photorécepteur (E1) étant un photorécepteur de résolution de position et chaque fois le photoémetteur (S1) et le photorécepteur correspondant (E1) sont disposés l'un par rapport à l'autre pour qu'un faisceau lumineux (L1a) émis par le photoémetteur (S1), après réflexion ou diffraction sur une surface limite (F) d'un objet (G) soit détecté par le photorécepteur (E1) correspondant, et
- une unité d'exploitation et de mémoire,
**caractérisé en ce que**
dans le chemin du faisceau lumineux émis (L1a) il y a un autre élément optique ou un pare-brise (202) installé et aligné pour que le faisceau lumineux (L1a) émis soit divisé en une première composante (L1t) transmise et une seconde composante (L1c) réfléchie et que la seconde composante (L1c) du faisceau lumineux (L1a) réfléchi par l'autre élément optique ou le pare-brise (202) puisse se détecter par une position définie du photorécepteur (E1) associé au photoémetteur (S1) de façon qu'une image décalée du photoémetteur apparaisse sur le photorécepteur associé.

2. Dispositif de capteur optoélectronique selon la revendication 1,
**caractérisé en ce que**
l'autre élément optique ou le pare-brise (202) sont installés en position inclinée suivant un certain angle par rapport à l'axe optique.

3. Dispositif de capteur optoélectronique selon la revendication 2,
**caractérisé en ce que**
l'angle par rapport à l'axe optique se règle à la main ou à l'aide d'un moteur.

4. Dispositif de capteur optoélectronique selon l'une des revendications précédentes,
**caractérisé en ce que**
le photorécepteur (E1) comprend une optique de réception (E1a) ayant une lentille de réception qui présente une division de pupille de réception avec des axes décalés.

5. Dispositif de capteur optoélectronique selon l'une des revendications précédentes,
**caractérisé par**
une unité de commande permettant de commander les photoémetteurs (S1, S2) pour que les photoémetteurs (S1, S2) émettent un faisceau lumineux (L1a, L2a), qui sont décalés dans le temps l'un par rapport à l'autre.

6. Dispositif de capteur optoélectronique selon l'une des revendications 1 à 5,
**caractérisé par**
une unité de commande permettant de commander les photoémetteurs (S1, S2) pour commander de façon regroupée les photoémetteurs (S1, S2) et pour que les groupes émettent un faisceau lumineux (L1a, L2a) de façon décalée dans le temps l'un par rapport à l'autre.

7. Dispositif de capteur optoélectronique selon l'une des revendications 1 à 5,
**caractérisé par**
une unité de commande permettant de commander les photoémetteurs (S1, S2) pour qu'ils émettent simultanément un faisceau lumineux (L1a, L2a).

8. Dispositif de capteur optoélectronique selon l'une des revendications 1 à 4,
**caractérisé par**
une unité de commande permettant de commuter entre des modes de fonctionnement des photoémetteurs (S1, S2) pour lesquels ils émettent simultanément un faisceau lumineux (L1a, L2a) ou qu'ils soient commandés de façon réunie dans des groupes et que ces groupes émettent de façon décalée dans le temps, un faisceau lumineux (L1a, L2a) ou encore que les photoémetteurs (S1, S2) soient commandés pour qu'ils émettent de manière décalée dans le temps l'un par rapport à l'autre, un faisceau lumineux (L1a, L2a).

9. Dispositif de capteur optoélectronique selon l'une des revendications 5 à 7,
**caractérisé en ce que**
l'unité d'exploitation et de mémoire ainsi que l'unité de commande sont conçues pour permettre des mesures en fonction de la phase et/ou du temps de parcours.

10. Dispositif de capteur optoélectronique selon l'une des revendications précédentes,
**caractérisé en ce que**
les éléments de réception (E1b, E2b) des photorécepteurs (E1, E2) sont réalisés sous forme de récepteurs à pixels multiples notamment sous la forme de diodes segmentées ou de réseaux de pixels.

11. Dispositif de capteur optoélectronique selon l'une des revendications précédentes,
**caractérisé en ce que**
les photorécepteurs (E1, E2) couvrent une plage angulaire de réception symétrique en rotation.

12. Dispositif de capteur optoélectronique selon l'une des revendications 1 à 10,
**caractérisé en ce que**
les photorécepteurs (E1, E2) ont une plage angulaire de réception en forme d'éventail.

13. Dispositif de capteur optoélectronique selon l'une des revendications précédentes,
**caractérisé par**
une base mécanique commune pour les éléments de réception (E1b, E2b) de chaque photorécepteur.

14. Dispositif de capteur optoélectronique selon l'une des revendications précédentes,
**caractérisé en ce que**
le photoémetteur (S1, S2) et le photorécepteur (E1, E2) d'une paire de photoémetteur/photorécepteur (1, 2) sont associés verticalement l'un par rapport à l'autre.

15. Dispositif de capteur optoélectronique selon l'une des revendications 1 à 13,
**caractérisé en ce que**
le photoémetteur (S1, S2) et le photorécepteur (E1, E2) d'une paire de photoémetteur/photorécepteur (1, 2) sont installés horizontalement l'un par rapport à l'autre.

16. Dispositif de capteur optoélectronique selon l'une des revendications précédentes,
**caractérisé en ce que**
les photoémetteurs (S1, S2) sont des composants LED, LD ou VCSEL.

17. Dispositif de capteur optoélectronique selon l'une des revendications précédentes,
**caractérisé en ce que**
les photoémetteurs (S1, S2) ont une optique de formation ou de collimation des faisceaux lumineux émis (L1a, L2a).

18. Dispositif de capteur optoélectronique selon l'une des revendications précédentes,
**caractérisé en ce que**
les photoémetteurs (S1, S2) émettent de la lumière dans le domaine visible.

19. Dispositif de capteur optoélectronique selon l'une des revendications précédentes,
**caractérisé en ce que**
l'unité de mémoire et d'exploitation est conçue pour comparer d'une part la position et/ou l'intensité enregistrée et lue sur un photorécepteur donné (E1, E2) correspondant à la seconde composante du faisceau lumineux (L1c) réfléchie par l'élément optique supplémentaire ou le pare-brise (202) et d'autre part la position et/ou l'intensité enregistrée avec un photoémetteur (S1, S2) associé au photorécepteur donné (E1, E2).

20. Procédé de contrôle du fonctionnement et/ou de l'ajustage d'un dispositif de capteur optique (10) comme photodétecteur par une mesure de temps de parcours ou de phase,
**caractérisé en ce que**
le faisceau lumineux (L1a) émis par un photoémetteur (S1, S2) est divisé par un élément optique ou un pare-brise (202) placé dans le chemin du faisceau, en une première composante (L1t) transmise et une seconde composante (L1c) réfléchie,
la seconde composante réfléchie (L1c) donnant une image de l'émetteur (S1, S2) dans une position d'un photorécepteur (E1, E2) associé au photoémetteur (S1, S2) et assurant la résolution de surface pour qu'une image décalée du photoémetteur soit copiée sur le photorécepteur correspondant.

21. Procédé selon la revendication 20,
**caractérisé en ce qu'**
en plus on compare d'une part la position et l'intensité de la seconde composante réfléchie (L1c) sur le photorécepteur (E1, E2) à résolution de lieu de chaque paire de photoémetteur/photorécepteur (1, 2) et d'autre part une position de référence et d'intensité de référence en mémoire.

22. Procédé selon la revendication 21,
**caractérisé en ce qu'**
on détermine les valeurs de consigne de la position de référence et de l'intensité de référence par les étapes suivantes, de préférence au cours de la production du capteur optoélectronique à savoir :
a) commande d'un photoémetteur séparé (S1, S2) et d'un photorécepteur séparé (E1, E2) en l'absence contrôlée d'objet dans le dispositif de capteur optique (10),
b) détection des valeurs de réception pour la position et l'intensité des seconds composants (L1c) du faisceau lumineux (L1a) pour ce photoémetteur (S1, S2) dans le photorécepteur (E1, E2) correspondant,
c) enregistrement des valeurs de réception détectées comme valeurs de réception de consigne pour cette paire de photoémetteur/photorécepteur (1, 2),
d) commande du photoémetteur suivant (S1, S2) et du photorécepteur suivant (E1, E2) si une valeur est encore indéterminée.

23. Procédé selon l'une des revendications 20 à 22,
**caractérisé en ce qu'**
on effectue le procédé avant chaque mise en oeuvre du dispositif de capteur optoélectronique (10) et/ou régulièrement pendant le fonctionnement.
